## Europäisches Patentamt
## European Patent Office
## Office européen des brevets

(19)

(11) Numéro de publication: **0 169 097**
**B1**

(12)

# FASCICULE DE BREVET EUROPEEN

(45) Date de publication du fascicule du brevet: 03.10.90

(51) Int. Cl.⁵: **B 60 N 2/06, B 60 N 2/08**

(21) Numéro de dépôt: 85401117.8

(22) Date de dépôt: 06.06.85

(54) Glissière à vis, à commande manuelle, électrique ou autre.

(30) Priorité: 15.06.84 FR 8409419

(43) Date de publication de la demande:
22.01.86 Bulletin 86/04

(45) Mention de la délivrance du brevet:
03.10.90 Bulletin 90/40

(84) Etats contractants désignés:
AT BE CH DE GB IT LI LU NL SE

(73) Titulaire: A. & M. Cousin et Cie
Le Bois de Flers
F-61103 Flers Cédex Orne (FR)

(72) Inventeur: Pipon, Yves
La Garenne St Georges des Groseillers
F-61100 Flers (FR)
Inventeur: Droulon, Georges
Rue de la Garenne St Georges des Groseillers
F-61100 Flers (FR)

(74) Mandataire: Madeuf, Claude Alexandre Jean
et al
CABINET MADEUF 3, avenue Bugeaud
F-75116 Paris (FR)

(56) Documents cités:
DE-A-1 755 740
DE-A-2 953 871
DE-A-3 143 122
FR-A-2 510 952
GB-A-1 429 616
US-A-1 806 014
US-A-2 966 069
US-A-3 184 209
US-A-3 223 377

Courier Press, Leamington Spa, England.

## Description

La présente invention a pour objet la réalisation de deux glissières parallèles pour le réglage longitudinal en avant ou en arrière pour un siège de véhicule. La conception de chaque glissière est réalisée par deux profilés, l'un fixé au plancher du véhicule, le second fixé au-dessous du siège se déplaçant avec celui-ci; une vis à pas réversible permet le déplacement du profilé supérieur par rapport à l'inférieur lorsque cette vis est rendue libre de son blocage.

La particularité de chaque glissière est le faible encombrement de la vis disposée à la place d'un verrou de conception connue, et de pouvoir bloquer cette vis à un endroit choisi. Un boîtier de retenue est disposé sous la vis ainsi que derrière la partie crantée du profilé fixe pour, dans le cas d'efforts importants sur l'ensemble glissières, entraîner la denture pour éviter la désolidarisation de la vis. Un élément de freinage intervient sur la vis pour assurer la mise en position de la partie supérieure mobile par rapport à la partie inférieure fixe. Ce moyen d'immobilisation peut être commandé soit par un moyen manuel (palonnier) qui agit de par une came sur les deux mâchoires de freinage, soit par un moyen électromagnétique (inverseur) qui au moyen d'une biellette montée en bout de la came desserre les mâchoires, soit par un micromoteur qui agit comme avec un électro-aimant.

Cet ensemble glissières peut être équipé d'un moteur agissant sur la vis par l'intermédiaire d'un train de pignons. Dans ce cas, c'est le moteur qui retient l'ensemble, aucun élément de freinage n'étant disposé sur la vis.

Depuis plusieurs années, on a cherché à réaliser des glissières pour sièges de véhicules qui tout en ayant une grande résistance permettent, d'une part, d'adapter la ceinture de sécurité sur le siège même et, d'autre part, d'obtenir dans le cas d'un choc frontal ou latéral une diminution des forces produites par la déformation et la destruction si nécessaire de ces glissières en évitant ainsi des blessures trop graves ou même la mort du passager assis sur le siège.

De plus, il est nécessaire que les dispositifs de crémaillères à moteur puissent être utilisés pratiquement sur plusieurs types de véhicules avec des modifications de détail extrêmement faibles, tout au plus la modification de l'emplacement des trous sur les profilés supérieurs mobiles afin de permettre la fixation aisée par le constructeur de l'armature du siège.

L'ensemble de ces paramètres nécessite donc une étude approfondie tant au point de vue du prix de la réalisation que de la résistance et de l'universalité d'adaptation.

On connaît par le DE—A—3 143 122 un siège pour véhicules dont l'assise peut être réglée dans le sens vertical (partie avant du siège) et dans le sens longitudinal au moyen d'une crémaillère, ou organe analogue, placée sur le rail de la glissière; le rail mobile, qui peut se déplacer par rapport au rail fixe, porte une vis sans fin dont la rotation est actionnée par un groupe moteur d'entraînement dont l'alimentation est contrôlée par un potentiomètre. La vis sans fin est irréversible et ne peut faire déplacer le siège que lors de la rotation du moteur d'entraînement. Dans ce cas, le dispositif d'entraînement du profilé supérieur est toujours solidaire de la vis sans fin irréversible. Ceci ne permet donc pas un positionnement longitudinal précis du siège et de plus, il n'existe pas de dispositif particulier de blocage de chaque vis sans fin.

Par rapport au documont précédent qui décrit une glissière à vis à commande manuelle ou motorisée, dans laquelle le groupe motoréducteur est solidaire du profilé supérieur mobile de la glissière dont le profilé inférieur fixe porte sur sa face intérieure une denture formant crémaillère, le groupe motoréducteur étant séparé du profilé supérieur par des organes facilitant le glissement des deux profilés l'un par rapport à l'autre, des vis sans fin montées sur un arbre pouvant tourner par rapport à la crémaillère étant reliées à une boîte de transfert solidaire du groupe motoréducteur, par un train d'engrenages et par des renvois d'angle par l'intermédiaire d'un arbre d'équilibrage de la rotation des vis sans fin montées de chaque côté du siège afin de permettre aux deux glissières respectives de travailler conjointement pour déplacer le siège, l'invention est caractérisée en ce que ces vis sans fin sont réversibles et sont bloquées dans la position choisie du siège par des patins à faces supérieures inclinées portant sur chaque vis considérée et normalement serrés l'un contre l'autre par des ressorts, les vis étant débloquées par les plats d'un barreau dont la rotation est commandée manuellement ou de façon motorisée.

Suivant une autre caractéristique de l'invention, le groupe motoréducteur et la boîte de transfert sont disposés, le premier, transversalement, et, la seconde, longitudinalement par rapport à l'axe du véhicule.

Diverses autres caractéristiques de l'invention ressortent d'ailleurs de la description détaillée qui suit.

Des formes de réalisation de l'objet de l'invention sont représentées à titre d'exemples non limitatifs, aux dessins annexés.

La fig. 1 est une coupe partielle d'une glissière montrant, sensiblement suivant la ligne I-I de la fig. 2, la crémaillère permettant, à l'aide d'une vis sans fin, le déplacement du profilé supérieur par rapport au profilé inférieur fixe solidaire du plancher du véhicule.

La fig. 2 est un plan correspondant à la fig. 1 mais montrant l'élément mobile qui est le profilé supérieur ainsi que la partie du profilé inférieur dans la zone de la crémaillère.

La fig. 3 est une vue en plan de deux glissières dont le déplacement est commandé par un groupe moteur disposé transversalement par rapport à l'axe longitudinal du véhicule.

La fig. 4 est une élévation partielle correspondant à la fig. 3.

La fig. 5 est une coupe prise sensiblement suivant la ligne V-V de la fig. 6 d'une seconde réalisation de la glissière à moteur dans laquelle la profilé supérieur est entraîné par une vis sans fin motrice en coopération avec une crémaillère solidaire de l'un des côtés du profilé inférieur fixe de la glissière.

La fig. 6 est une coupe longitudinale correspondant à la fig. 5 de la partie externe supérieure de la glissière ainsi que la partie verticale dentée du profilé inférieur.

La fig. 7 montre deux glissières commandées par la seconde forme de réalisation à l'aide d'un groupe moteur disposé longitudinalement par rapport au siège.

La fig. 8 est une élévation de face correspondant à la fig. 7.

Les fig. 9 et 10 sont des coupes-élévations du dispositif de blocage de la vis sans fin dans le cas où l'organe moteur ne constitue pas le frein de la vis, la fig. 10 étant prise suivant la ligne X-X de la fig. 9.

La fig. 11 est une élévation longitudinale de l'organe commandant le dispositif de blocage des fig. 9 et 10.

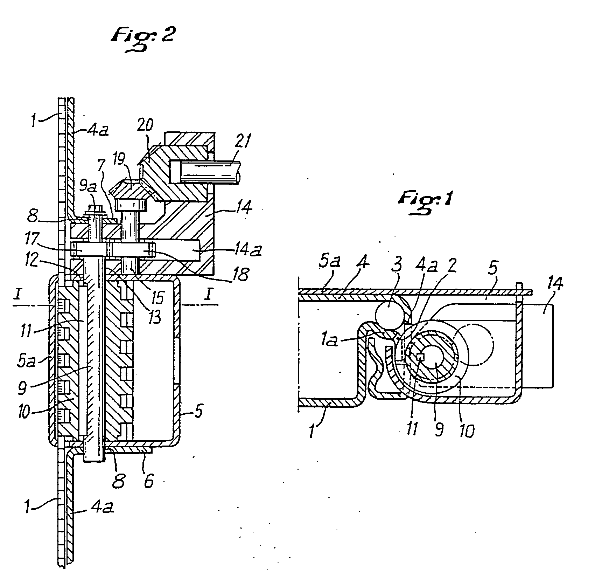

A la fig. 1, on a représenté, en coupe partielle à grande échelle, le profilé inférieur 1 de la glissière qui comporte sur son aile 1a une denture 2 formant une crémaillère.

L'aile 1a est conformée pour recevoir les dispositifs 3 facilitant le coulissement du profilé supérieur 4 de la glissière par rapport au profilé inférieur 1 qui est fixe et normalement solidaire du plancher du véhicule.

L'aile 4a verticale du profilé supérieur 4 est découpée sur une certaine longueur pour permettre la mise en place d'un boîtier 5 qui est maintenu sur le profilé supérieur 4 par le couvercle 5a et, de part et d'autre du boîtier 5, sont disposées des équerres 6, 7 destinées à former du côté de l'équerre 6, un palier 8 dans lequel repose un arbre 9 servant d'arbre de rotation à une vis sans fin 10. 11 désigne la clavette verrouillant, sur l'arbre 9, la vis sans fin 10.

L'arbre 9 repose, à côté de l'équerre 7, dans un palier lisse 8 formé, d'une part, par un trou 12 percé dans le côté du carter 5, et d'autre part, dans le trou 13 percé dans une pièce 14 en L destinée à supporter:

a) l'extrémité 9a amincie de l'arbre 9,
b) un demi-arbre 15.

La pièce 14 en L présente un évidement 14a qui contient deux pignons 17, 18 engrenant l'un avec l'autre de façon à ce que le demi-arbre 15 tourne en même temps que l'arbre 9 mais dans le sens inverse.

Finalement, le demi-arbre 15 porte un pignon de renvoi 19 coopérant avec un deuxième pignon de renvoi 20 monté en bout d'un arbre 21 dont le rôle sera expliqué plus loin.

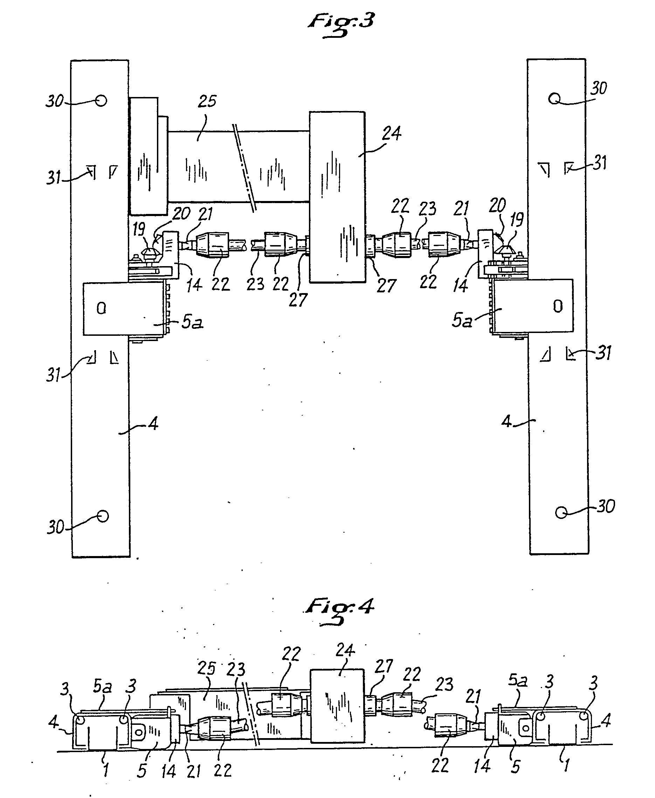

Comme on peut le voir aux fig. 3 et 4, les deux glissières 1 et 4 parallèles comportent chacune un dispositif à vis sans fin placé sur le côté intérieur des glissières et les arbres 21 sont reliés, d'une part, par des joints à la Cardan 22 et, d'autre part, entre les joints à la Cardan, par des arbres 23, aboutissant à une boîte de transmission 24 recevant du groupe motoréducteur 25, son mouvement de rotation qui est transmis par un ensemble à pignons, non représenté aux sorties 27 des bouts d'arbres attelés aux joints à la Cardan 22 des arbres 23 permettant ainsi de transmettre le mouvement de rotation du groupe motoréducteur 25 aux vis, sans fin 10 coopérant avec les dentures 2 formant crémaillères des profilés inférieurs 1 des glissières.

Comme il a été indiqué ci-dessus, le pas adopté pour les vis sans fin permet à celles-ci d'être complètement réversibles et donc de pouvoir tourner folles lorsqu'elles sont libres. Le pas de la vis sans fin 10 est le plus souvent compris entre 17 et 49°.

Comme il est visible à la fig. 3, le groupe motoréducteur est solidaire d'un des profilés supérieurs 4 d'une des glissières et donc de l'ensemble et est mobile par rapport aux profilés inférieurs 1 qui sont seuls fixés sur le plancher du véhicule.

Les trous 30, portés par la face supérieure des profilés 4, servent à la fixation de l'armature du siège placé sur les glissières 31 servant à limiter la course du profilé supérieur par rapport au profilé inférieur.

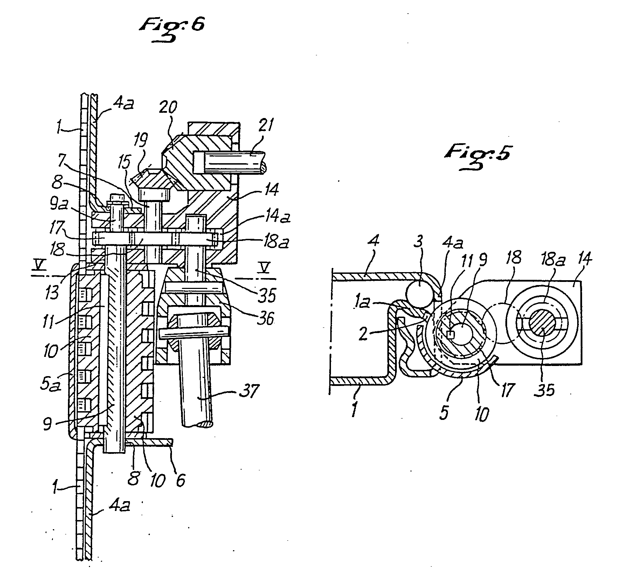

A la fig. 6, on retrouve les mêmes éléments qui portent donc les mêmes références.

Un pignon 18a engrenant avec le pignon 18 entraîne un arbre 35 en liaison par un joint à la Cardan 36 avec un arbre 37 qui, par un deuxième joint à la Cardan 38, est en liaison avec une boîte de transfert 39 montée par une équerre 39a sur la face supérieure d'un des profilés supérieurs 4 des glissières.

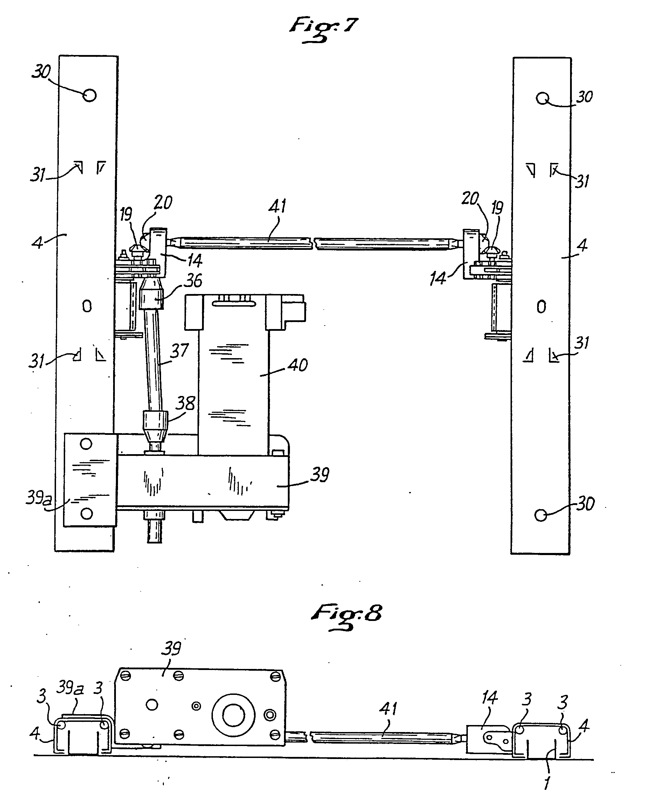

40 désigne le groupe motoréducteur (voir fig. 7 et 8) entraînant la boîte de transfert 39 qui, par l'intermédiaire de l'arbre 37 et du pignon 18a, retransmet le mouvement aux pignons de renvoi d'angle 19, 20, puis à l'arbre transversal 41 joignant les renvois d'angle 19, 20 du deuxième dispositif de transmission, monté sur la deuxième glissière de l'ensemble.

Suivant les cas, il est possible de monter tantôt le dispositif de commande des fig. 3 et 4 tantôt le dispositif des fig. 7 et 8 en particulier compte tenu de l'espace dont on dispose pour placer la commande sous les sièges avant du véhicule considéré.

Bien entendu, le groupe motoréducteur 25 ou 40 peut être un groupe motoréducteur électrique, pneumatique, oléopneumatique, hydraulique, magnétique ou autre.

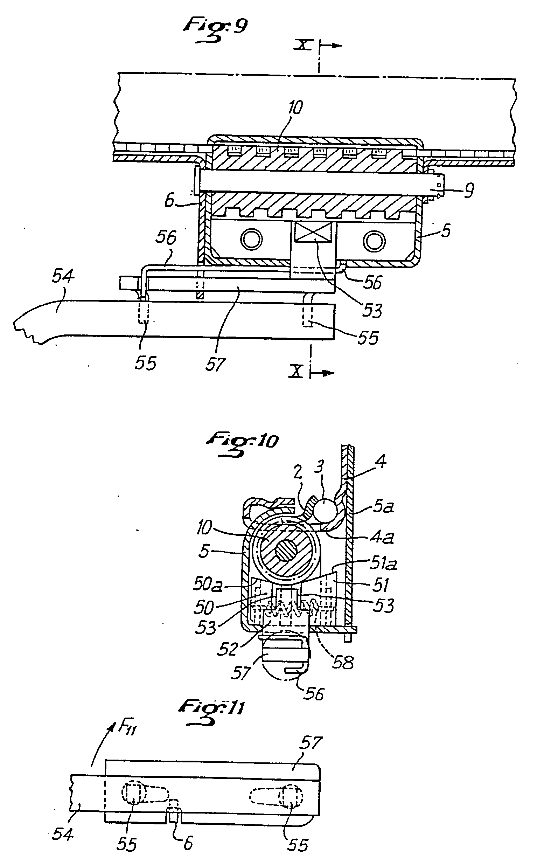

On a beaucoup insisté sur le fait que les vis sans fin 10 étaient complètement réversibles et que de ce fait on pouvait commander doublement le siège placé sur les glissières soit à l'aide du groupe motoréducteur considéré, soit en remplaçant le groupe motoréducteur par un moyen de freinage de la vis et en permettant ainsi au passager de déplacer directement son siège vers la position qui lui convenait. Du fait de la réversibilité, il faut bloquer le siège dans la position requise et c'est pourquoi, il et prévu de placer

dans le boîtier 5, en tangence sur la vis sans fin 10, deux patins 50, 51 qui, en portant sur la périphérie extérieure de la vis (voir fig. 9 et 10) bloquent cette vis et assurent donc une liaison correcte entre la denture à crémaillères 2 et le pas de la vis 10. Ces patins 50, 51 sont resserrés l'un contre l'autre normalement par un ressort 58 qui tend à les rapprocher de façon que leurs faces supérieures inclinées 50a, 51a frottent sur la périphérie de la vis 10.

De plus, pour manoeuvrer ces patins, un barreau 52, présentant deux plats 53, forme une came.

Lorsque l'on fait tourner le barreau 52 suivant le sens de la flèche F$_{11}$ (fig. 9 et 11) à l'aide de la commande manuelle 54, les plats 53 font éloigner les patins 50, 51 l'un de l'autre contre l'action du ressort 58 et de ce fait la vis sans fin 10 considérée est libre. En conjuguant, à l'aide de la commande manuelle 54, le mouvement sur les deux paires de patins 50, 51 d'un ensemble de glissières, on rend les deux vis 10 libres et on permet ainsi le réglage du siège placé sur ces glissières.

Une biellette 57 solidaire du barreau 52 comporte deux pattes 55 recevant la partie extrême d'un palonnier 54.

Finalement, 56 désigne un ressort de rappel ramenant chaque barreau 52 dans sa position première en facilitant ainsi le retour des glissières en position verrouillée.

Bien entendu, le blocage et le déblocage des commandes des patins 50, 51 peuvent être obtenus par des organes moteurs électriques, pneumatiques, oléopneumatiques, hydrauliques, magnétiques ou autres qui sont actionnés en même temps que les groupes motoréducteurs 25-40 de façon à rendre ces glissières entièrement automotrices.

Par mesure de sécurité, les profilés inférieurs 1 peuvent être munis dans l'intercalaire des profilés inférieurs, dans la zone des vis sans fin 10, de rampes destinées à coopérer avec des chariots solidaires du profilé supérieur 4 permettant en cas de choc frontal ou latéral de bloquer d'une manière sûre et définitive les profilés inférieurs 1 par rapport aux profilés supérieurs 4, ce dispositif étant d'ailleurs déjà connu.

Finalement, les glissières conformes à l'invention sont d'une sécurité totale puisque, même si elles ne sont pas rigoureusement parallèles, elles sont parfaitement bloquées par les vis sans fin dès que ces dernieres sont elles-mêmes verrouillées, ce qui n'était jamais le cas avec les types de glissières antérieures. Ceci permet une grande facilité de montage des glissières sans soins particuliers même si la géométrie des points de fixation sur siège et sur plancher n'est pas rigoureuse.

Dans certains cas où la glissière est commandée par un groupe moteur, ce groupe moteur peut être fixé sur le profilé inférieur pour faciliter le montage des différents organes en particulier les liaisons pour l'amenée de l'énergie au moteur.

Il est possible également de prévoir que les vis sans fin 10 sont solidaires de la partie mobile de chaque glissière tandis que les parties fixes de ces glissières portent les dentures 2 formant crémaillère.

Les arbres 21 ou 41 permettent d'équilibrer la rotation des deux vis sans fin 10 de façon à ce qu'il ne se produise pas un déclenchement transversal des glissières.

## Revendications

1. Glissière à vis à commande manuelle ou motorisée, dans laquelle le groupe motoréducteur (25, 40) est solidaire du profilé supérieur mobile (4) de la glissière dont le profilé inférieur fixe (1) porte sur sa face intérieure une denture (2) formant crémaillère, le groupe motoréducteur étant séparé du profilé supérieur (4) par des organes (3) facilitant le glissement des deux profilés l'un par rapport à l'autre, des vis sans fin (10) montées sur un arbre (9) pouvant tourner librement par rapport à la crémaillère (2) étant reliées à une boîte de transfert (24, 39) solidaire du groupe motoréducteur (25, 40) par un train d'engrenages (17, 18, 18a) et par des renvois d'angle (19, 20), par l'intermédiaire d'un arbre (21, 41) d'équilibrage de la rotation des vis sans fin (10) montées de chaque côté du siège afin de permettre aux deux glissières respectives de travailler conjointement pour déplacer le siège, caractérisée en ce que ces vis sans fin (10) sont réversibles et sont bloquées dans la position choisie du siège par des patins (50, 51) à faces supérieures inclinées (50a, 51a) portant sur chaque vis considérée et normalement serrés l'un contre l'autre par des ressorts (58), les vis étant débloquées par les plats (53) d'un barreau (52) dont la rotation est commandée manuellement ou de façon motorisée.

2. Glissière à vis suivant la revendication 1, caractérisée en ce que le groupe motoréducteur (25) et la boîte de transfert (24) sont disposés, le premier transversalement et la seconde longitudinalement par rapport à l'axe du véhicule.

3. Glissière à vis suivant la revendication 1, caractérisée en ce que le groupe motoréducteur (40) et la boîte de transfert (24) sont disposés le premier longitudinalement et la seconde transversalement par rapport à l'axe du véhicule.

4. Glissière à vis suivant la revendication 1, caractérisée en ce que l'organe moteur (25-40) est solidaire du profilé inférieur fixe (1) afin d'éviter le déplacement des liaisons d'amenée d'énergie au moteur.

## Patentansprüche

1. Gleitführung mit Schraube mit manuellem oder motorgesteuerten Antrieb, wobei der Getriebemotor (25, 40) mit dem oberen beweglichen Profil (4) der Gleitführung verbunden ist, deren unteres unbewegliches Profil (1) an seiner Innenseite eine eine Zahnstange bildende Zahnung (2) trägt, und der Getriebemotor vom oberen Profil (4) mittels Einrichtungen (3) beabstandet ist, die das Gegeneinandergleiten der beiden Profile erleichtern, und Schnecken (10) auf einer sich gegenüber der Zahnstange (2) frei drehbaren Welle (9) angebracht sind, und die Schnecken (10) über ein Zahnradvorgelege (17, 18, 18a), ein Winkelvorgelege (19, 20) und über eine Rotationsausgleichswelle (21, 41) für die Schnecken 10 mit einem an den Getriebemotor (25, 40) angeschlossenen Verteilergetriebe (24, 39) verbunden sind, wobei die Schnecken an beiden Seiten des Sitzes angebracht sind, um ein Zusammenspiel der beiden Gleitführungen zum Verschieben des Sitzes zu ermöglichen, dadurch gekennzeichnet, daß die Schnecken (10) umschaltbar sind und in einer gewünschten Position des Sitzes durch Klötze (50, 51) mit geneigten Oberseiten (50a, 51a) blockiert werden, die an jeder der beiden Schnecken angreifen und normalerweise mittels Federn (58) gegeneinandergedrückt sind, und daß die Schnecken durch Anschlagflächen (53) eines Stabes (52), dessen Orehung manuell oder durch Motorantrieb erfolgt, freigegeben werden.

2. Gleitführung mit Schraube nach Anspruch 1, dadurch gekennzeichnet, daß der Getriebemotor (25) und das Verteilergetriebe (24) so angeordnet sind, daß der Getriebemotor (25) quer zur Wagenachse und das Verteilergetriebe (24) in Längsrichtung zu dieser angeordnet sind.

3. Gleitführung mit Schraube nach Anspruch 1, dadurch gekennzeichnet, daß der Getriebemotor (40) und das Verteilergetriebe (24) so angeordnet sind, daß der Getriebemotor (40) in Längsrichtung zur Wagenachse und das Verteilergetriebe (24) quer zu dieser angeordnet sind.

4. Gleitführung mit Schraube nach Anspruch 1, dadurch gekennzeichnet, daß die Motorgruppe (25-40) mit dem unteren unbeweglichen Profil (1) verbunden ist, um eine Verschiebung der Anschlüsse zur Energiezufuhr zum Motor zu vermeiden.

**Claims**

1. Screw slide with a manual or motorised control, in which the gear-down unit (25, 40) is rigidly connected to the mobile upper section (4) of the slide, the fixed lower section (1) of which carries on its inner face a rack forming toothing (2), the gear down unit being spaced from the upper section (4) by means (3) facilitating a sliding of the two sections the one with respect to the other, endless screws (10) mounted on a shaft (9) being able to freely rotate with respect to the rack (2) being connected to a power transfer box (24, 39) rigidly connected to the gear down unit (25, 40) by a train of gears (17, 18, 18a) and by angle transmissions (19, 20), through a shaft (21, 41) for balancing the rotation of the endless screws (10) mounted on each side of the seat in order to enable the two respective slides to work jointly for moving the seat, characterized in that these endless screws (10) are reversible and are locked in the chosen position of the seat by shoes (50, 51) with inclined upper faces (50, 51a) bearing on each screw in question and normally tightened the one on the other by springs (58), the screws being unlocked by the flat portions (53) of a bar (52), the rotation of which is controlled manually or in a motorised way.

2. Screw slide according to claim 1, characterized in that the gear down unit (25) and the power transfer box (24) are placed, the first one transversely and the second one longitudinally with respect to the vehicle axis.

3. Screw slide according to claim 1, characterized in that the gear down unit (40) and the power transfer box (24) are placed, the first one longitudinally and the second one transversely with respect to the vehicle axis.

4. Screw slide according to claim 1, characterized in that the motor unit (25, 40) is rigidly connected to the fixed lower section (1) in order to avoid the displacement of the connections supplying power to the motor.

Fig. 2

Fig. 1

## Fig.3

## Fig.4

*Fig. 6*

*Fig. 5*

## *Fig.7*

## *Fig.8*

Fig. 9

Fig. 10

Fig. 11